Europäisches Patentamt

European Patent Office

Office européen des brevets

(19)

(11) **EP 0 961 655 B1**

(12) **EUROPÄISCHE PATENTSCHRIFT**

(45) Veröffentlichungstag und Bekanntmachung des Hinweises auf die Patenterteilung:
**20.12.2000   Patentblatt 2000/51**

(51) Int Cl.7: **B01L 3/02**, G01N 35/00
// B05B9/04, F04B19/00

(21) Anmeldenummer: **98909392.7**

(22) Anmeldetag: **05.02.1998**

(86) Internationale Anmeldenummer:
**PCT/EP98/00617**

(87) Internationale Veröffentlichungsnummer:
**WO 98/36832 (27.08.1998 Gazette 1998/34)**

(54) **MIKRODOSIERVORRICHTUNG UND VERFAHREN ZUM BETREIBEN DERSELBEN**

MICRODOSING DEVICE AND METHOD FOR ITS OPERATION

DISPOSITIF DE MICRODOSAGE ET PROCEDE PERMETTANT DE LE FAIRE FONCTIONNER

(84) Benannte Vertragsstaaten:
**AT BE CH DE FI FR GB IT LI NL SE**

(30) Priorität: **19.02.1997   DE 19706513**
**22.01.1998   DE 19802367**

(43) Veröffentlichungstag der Anmeldung:
**08.12.1999   Patentblatt 1999/49**

(73) Patentinhaber:
**HAHN-SCHICKARD-GESELLSCHAFT FÜR ANGEWANDTE FORSCHUNG E.V.**
**D-78052 Villingen-Schwenningen (DE)**

(72) Erfinder:
  • **ZENGERLE, Roland**
    **D-78050 Villingen-Schwenningen (DE)**
  • **FREYGANG, Michael**
    **D-78050 Villingen-Schwenningen (DE)**
  • **STEHR, Manfred**
    **D-78054 Villingen-Schwenningen (DE)**
  • **MESSNER, Stephan**
    **D-78054 Villingen-Schwenningen (DE)**
  • **ASHAUER, Matthias**
    **D-78089 Unterkirnach (DE)**
  • **ROSSBERG, Rainer**
    **D-78050 Villingen-Schwenningen (DE)**

(74) Vertreter: **Schoppe, Fritz, Dipl.-Ing.**
    **Schoppe, Zimmermann & Stöckeler,**
    **Patentanwälte,**
    **Postfach 71 08 67**
    **81458 München (DE)**

(56) Entgegenhaltungen:
    EP-A- 0 439 327         FR-A- 2 650 634
    US-A- 5 205 819         US-A- 5 593 290

  • **SCHWESINGER N: "PLANARER TINTENSTRAHLDRUCKKOPF MIT PIEZOKERAMISCHEM ANTRIEB" F & M. FEINWERKTECHNIK MIKROTECHNIK MESSTECHNIK, Bd. 101, Nr. 11/12, 1.November 1993, Seiten 456-460, XP000411575 in der Anmeldung erwähnt**

**Beschreibung**

Die vorliegende Erfindung bezieht sich auf eine Mikrodosiervorrichtung und ein Verfahren zum Betreiben derselben.

Die präzise Dosierung kleinster Flüssigkeitsvolumina im Bereich zwischen 0,01 µl und 1 µl ist beispielsweise auf den Gebieten der Biotechnologie, der DNA-Analytik sowie der kombinatorischen Chemie von großer und entscheidender Bedeutung. Gemäß dem Stand der Technik werden zur Dosierung kleiner Volumina überwiegend Dispenser oder Pipetten verwendet. Dabei wird das zu dosierende Volumen entweder direkt, durch eine sogenannte Kolbendirektverdrängung, oder über ein zwischengeschaltetes Luftpolster verdrängt. Diesbezüglich sei beispielsweise auf den Artikel "Pipettieren und Dispensieren", A. Jahns, Fachzeitschrift der Technischen Assistenten in der Medizin, Jahrgang 8 (1993), Heft 12, Seiten 1166 - 1172, Umschau Zeitschriftenverlag, verwiesen.

Luftpolsterpipetten eignen sich für die Dosierung von Volumina zwischen 0,1 µl und 5 ml, wobei bei Volumina größer als 1 µl Genauigkeiten von ±2-3% erreicht werden. Bei kleineren Volumina werden jedoch aufgrund von Oberflächeneffekten an der Pipettenspitze nur Genauigkeiten von ca. ±10% erreicht. Die Beschränkung bei der Dosiergenauigkeit bei kleinen Volumina beruht hauptsächlich darauf, daß die Pipetten- bzw. Dispenser-Spitze in das zu dosierende Medium eingetaucht werden muß, wobei Effekte wie Oberflächenspannung, Benetzung und hydrostatischer Druck die Dosiermenge beeinflussen. Um diese Probleme sowie die Gefahr der Medienverschleppung durch das Eintauchen zu umgehen, sollte ein Dosiersystem auf der Abgabe des Dosiervolumens im freien Strahl beruhen. Direktverdränger-Dispensiervorrichtungen bieten diesen zusätzlichen Vorteil, allerdings nur bei Volumina von ca. 10 µl und darüber.

Bekannte Systeme, die geringste Flüssigkeitsvolumen im Freistrahl abgeben, sind Tintenstrahl-Druckköpfe. Es sind Tintenstrahl-Druckköpfe bekannt, die auf zwei grundsätzlich unterschiedlichen Prinzipien basieren, solche, die unter Verwendung thermischer Wandler wirksam sind, und solche, die unter Verwendung piezoelektrischer Wandler wirksam sind. Diesbezüglich sei auf die Druckschriften N. Schwesinger: "Planarer Tintenstrahldruckkopf". F&M, 11-12; S. 456-460; 1993; H. Bentin, M. Doering, W. Radtke, U. Rothgordt: "Physical Properties of Micro-Planar Ink-Drop Generators". J. Imaging Technology, 3; S. 152-155; 1986; und Wolfgang Wehl; Tintendrucktechnologie: Paradigma und Motor der Mikrosystemtechnik; Feinwerktechnik & Meßtechnik; Teil 1 in Ausgabe 6/95; Teil 2 in Ausgabe 9/95, verwiesen.

Bei Druckköpfen nach dem "Drop-on-Demand"-Verfahren wird nach Anlegen eines Spannungspulses jeweils ein kleiner Tintentropfen im Freistrahl auf ein Papier geschleudert. Ein typischer Tropfendurchmesser liegt bei etwa 60 µm, das Volumen beträgt also etwa 0,0001 µl. Diese Druckköpfe sind in der Regel jedoch nur für die Verwendung von speziellen Tinten ausgelegt. Medien, die beispielsweise in der Biotechnologie eingesetzt werden, unterscheiden sich in Viskosität und Oberflächenspannung von den Tinten meist sehr stark. Die Viskosität und die Oberflächenspannung beeinflussen jedoch die Tropfengröße und somit das dosierte Volumen beträchtlich. Ferner ist eine Tropfengenerierung überhaupt nur in einem sehr engen Viskositätsbereich möglich. Eine Modifizierung des Volumens der Einzeltropfen kann überdies durch eine Modifikation der Ansteuerpulse nur in einem sehr eingeschränkten Bereich erfolgen.

Es sind ferner Dosiersysteme bekannt, die auch in der Lage sind, bei Medien stark unterschiedlicher Viskosität Tropfen zu generieren. Ein solches System ist beispielsweise in der Schrift "Mikrodosierung", Firmenschrift der Fa. microdrop GmbH, Norderstedt, 1995, beschrieben. Wie bei Tintenstrahldruckköpfen wird das Tropfenvolumen dabei hauptsächlich von der Größe des Düsendurchmessers bestimmt. Nur in stark eingeschränktem Maße kann es auch durch die elektrische Ansteuerung des Aktors beeinflußt werden. Der Vorgang des Tropfenabrisses an der Düse hängt jedoch wie bei den Tintendruckköpfen von den physikalischen Eigenschaften, d.h. der Viskosität, der Oberflächenspannung, usw., der zu dosierenden Medien ab. Wiederum ist somit die exakte Größe der Tropfen stark medienabhängig. Die Dosierung eines gewünschten Volumens, das meist in einem Bereich von 0,1µl - 1µl liegt, beruht auf dem Abzählen von Einzeltropfen gleicher Größe. Das typische Volumen eines Einzeltropfens ist kleiner 0,001µl. Da sich die Volumenfehler der Einzeltropfen bei diesem Verfahren jedoch aufsummieren, ist die Dosierpräzision stark eingeschränkt.

Um eine Erhöhung dieser Dosierpräzision zu ermöglichen, sind aufwendige Systeme notwendig. Beispielsweise kann ein Bildverarbeitungssystem verwendet werden, mit dem sich während eines Dosiervorgangs die Größe der Einzeltropfen bestimmen und die benötigte Tropfenanzahl berechnen läßt. Ferner kann bei einem alternativen Verfahren zur Steigerung der Dosierpräzision dem zu dosierenden Medium ein fluoreszierender Stoff beigemischt werden. Bei diesem alternativen Verfahren wird der Dosiervorgang beendet, wenn die Intensität des Fluoreszenzsignals den Sollwert erreicht. Es ist jedoch offensichtlich, daß beide genannten Verfahren zur Steigerung der Dosierpräzision jeweils sehr aufwendig und teuer sind.

Die EP-A-0439327 beschreibt ein Steuersystem für eine Mikropumpe, die beispielsweise in einer Dosiervorrichtung verwendbar ist. Das Steuersystem steuert selektiv die Erzeugung von Treiberpulsen, um das Ausgeben von Fluid durch die Pumpe zu steuern. Gemäß dem bekannten Steuersystem werden Potentialschwankungen des piezoelektrischen Treiberelements der Mikropumpe erfaßt, um festzustellen, ob die Pumpe ordnungsgemäß arbeitet oder nicht, um gegebenenfalls den Pumpbetrieb einzustellen und die Mikropumpe zu ersetzen.

Die US-A-5 205 819 offenbart eine Infusionspumpe zum Dosieren von Flüssigkeiten, beispielsweise bei der Infusion von Flüssigkeiten in den menschlichen Körper. Die offenbarte Infusionspumpe umfaßt eine Druckkammer, die teilweise von einer Membran begrenzt ist. Ein piezoelektrisches Bauglied ist vorgesehen, um die Membran zu betätigen. Die Druckkammer ist über eine Einlaßleitung mit einem Flüssigkeitsvorrat und über eine Auslaßleitung mit einer Auslaßöffnung verbindbar. Eine Steuereinheit ist zum Ansteuern des piezoelektrischen Bauglieds vorgesehen, wobei die Infusionspumpe überdies Erfassungselektroden aufweisen kann, die Signale liefern, die ein Ausmaß der Biegung der Membran anzeigen. Diese Erfassungselektroden dienen zum einen dazu, Fehlerbedingungen aufgrund von Luftblasen in der Pumpkammer oder aufgrund von Verstopfungen der Auslaßleitung anzuzeigen. Die Erfassungselektroden können während eines normalen Betriebs überdies dazu dienen, ein Ausgangssignal zu liefern, das ein Maß des Flüssigkeitsvolumens darstellt, das bei jeder Betätigung der Membran dosiert wird. Um eine vorbestimmte Flußrate zu liefern, ist die Steuereinheit programmiert, um die Pulsfrequenz zur Betätigung des piezoelektrischen Bauglieds abhängig von der Signalamplitude des Ausgangssignals der Erfassungselektroden einzustellen. Die bekannte Infusionspumpe wird durch eine Pulssequenz angetrieben, die jeweils aus positiven und negativen Pulsen gleicher Amplitude und Dauer bestehen, wobei die Frequenz der Pulssequenz entsprechend der erforderlichen Flußrate gesteuert wird.

Ausgehend von dem genannten Stand der Technik liegt der vorliegenden Erfindung die Aufgabe zugrunde, eine wenig aufwendige Mikrodosiervorrichtung zu schaffen, die die Ausgabe exakt definierter Fluidvolumen ermöglicht.

Diese Aufgabe wird durch eine Mikrodosiervorrichtung gemäß Anspruch 1 gelöst.

Der vorliegenden Erfindung liegt ferner die Aufgabe zugrunde, eine wenig aufwendige Pipettiervorrichtung zu schaffen, die die Aufnahme und Ausgabe exakt definierter Fluidvolumen ermöglicht.

Diese Aufgabe wird durch eine Pipettiervorrichtung gemäß Anspruch 14 gelöst.

Eine weitere Aufgabe der vorliegenden Erfindung besteht darin, ein Verfahren zum Betreiben einer solchen Mikrodosiervorrichtung zu schaffen.

Diese Aufgabe wird durch ein Verfahren gemäß Anspruch 17 gelöst.

Die vorliegende Erfindung schafft eine Mikrodosiervorrichtung mit einer Druckkammer, die zumindest teilweise von einem Verdränger begrenzt ist, einer Betätigungseinrichtung zum Betätigen des Verdrängers, wobei durch die Betätigung des Verdrängers das Volumen der Druckkammer veränderbar ist, einem Medienreservoir, das über eine erste Fluidleitung fluidmäßig mit der Druckkammer verbunden ist, und einer Auslaßöffnung, die über eine zweite Fluidleitung fluidmäßig mit der Druckkammer verbunden ist. Die erfindungsgemäße Mikrodosiervorrichtung weist ferner eine Einrichtung zum Erfassen der jeweiligen Stellung des Verdrängers sowie eine Steuereinrichtung, die mit der Betätigungseinrichtung und der Einrichtung zum Erfassen der Stellung des Verdrängers verbunden ist, auf, wobei die Steuereinrichtung die Betätigungseinrichtung auf der Grundlage der erfaßten Stellung des Verdrängers oder auf der Grundlage während zumindest eines vorherigen Dosierzyklusses erfaßter Stellungen des Verdrängers steuert, um den Ausstoß eines definierten Fluidvolumens aus der Auslaßöffnung zu bewirken. Die Steuereinrichtung steuert die Betätigungseinrichtung mit einem Signal geringer Flankensteilheit an, um eine Bewegung des Verdrängers aus einer ersten Stellung in eine vorbestimmte zweite Stellung zu bewirken, wobei die zweite Stellung des Verdrängers ein größeres Volumen der Druckkammer definiert als die erste Stellung. Nachfolgend steuert die Steuereinrichtung die Betätigungseinrichtung mit einem Signal großer Flankensteilheit an, um eine Bewegung des Verdrängers aus der zweiten Stellung in die erste Stellung zu bewirken, um dadurch ein definiertes Fluidvolumen aus der Auslaßöffnung auszustoßen.

Bei anfänglicher Inbetriebnahme der Mikrodosiervorrichtung werden zunächst die Druckkammer und die Fluidleitungen mit einem Fluid befüllt, bevor die Betätigungseinrichtung mit dem Signal geringer Flankensteilheit angesteuert wird.

Die erfindungsgemäße Mikrodosiervorrichtung kann vorteilhaft unter Verwendung mikromechanischer Verfahren, insbesondere Verfahren der Halbleitertechnologie, hergestellt werden. Ferner kann die erfindungsgemäße Mikrodosiervorrichtung modular aufgebaut sein, derart, daß beispielsweise die Druckkammer, der Verdränger, die Einrichtung zum Erfassen der Stellung des Verdrängers und optional zumindest Teile der ersten und der zweiten Fluidleitung als austauschbares Modul mittels mikromechanischer Verfahren aufgebaut sind.

Bei der vorliegenden Erfindung wird vorzugsweise durch integrierte Sensoren die Stellung des Verdrängers erfaßt. Eine jeweilige Stellung des Verdrängers entspricht einem definierten Volumen der Druckkammer. Die Steuereinrichtung ist somit in der Lage, auf der Grundlage der Kenntnis des Volumens der Druckkammer die Betätigungseinrichtung zur Bewegung des Verdrängers derart anzusteuern, daß der Ausstoß eines definierten Fluidvolumens aus der Auslaßöffnung bewirkt wird. Der wesentliche Vorteil eines derartigen Dosiervorgangs unter Verwendung einer integrierten Volumenmessung liegt darin, daß ein Fluidstrahl als Ganzes abgegeben wird, und nicht eine Vielzahl von Einzeltropfen addiert werden müssen, um die gewünschten Dosiervolumina, beispielsweise auf dem Gebiet der Biotechnologie, zu erhalten. Obwohl der genaue Abriß des Freistrahls an der Auslaßöffnung wie bei herkömmlichen Systemen von den Medieneigenschaften beeinflußt wird, wird gemäß der vorliegenden Erfindung dennoch eine höhere Dosiergenauigkeit erhalten. Da durch den Medienverdränger der erfindungsgemäßen Mikrodosiervorrichtung problemlos auch größere Volumina im gewünschten Bereich zwischen 0,01µl bis 0,1µl während eines Vorgangs abgegeben werden können, spielen Volumenfehler, die eine Folge eines Abrisses der Einzeltropfen sind und bei Tropfenvolumina von 0,0001µl einen großen relativen Fehler darstellen würden, keine Rolle mehr. Eine Summation der systematischen Fehler pro Tropfen tritt gemäß der vorliegenden Erfindung nicht mehr auf.

Bei der Rückstellung des Verdrängers in die zweite Stellung, wobei das Volumen der Druckkammer verringert wird, um das Fluid über die Auslaßöffnung als freien Strahl auszustoßen, ist die Bewegung des Fluids in der ersten Fluidleitung, d.h. dem Reservoirkanal, und der zweiten Fluidleitung, d.h. dem Düsenkanal, nahezu ausschließlich von der Relation der Flüssigkeitsträgheit in den betreffenden Fluidleitungen bestimmt, wobei die Relation der Strömungswiderstände der Fluidleitungen dagegen vernachlässigbar ist. Dadurch ist das definierte Fluidvolumen, das mittels der erfindungsgemäßen Mikrodosiervorrichtung ausgestoßen wird, nahezu unabhängig von der Viskosität, Oberflächenspannungen, usw. des zu dosierenden Mediums. Folglich kann mittels der vorliegenden Erfindung eine Dosierung sich in Viskosität und Oberflächenspannung unterscheidender Medien, wie sie beispielsweise in der Biotechnologie eingesetzt werden, durchgeführt werden.

Bei dem erfindungsgemäßen Dosierverfahren wird ein Fluidstrahl, oder bei der Anwendung für Flüssigkeiten ein Flüssigkeitsstrahl, mit variablem, einstellbarem Volumen von einem Medienverdränger erzeugt, wobei das Volumen des Flüssigkeitsstrahls über einen bei einem bevorzugten Ausführungsbeispiel in den Medienverdränger integrierten Volumensensor geregelt wird. Der Volumensensor detektiert jeweils den aktuellen Verdrängungszustand des Medienverdrängers und gibt ein denselben anzeigendes elektrisches Signal aus. Die Steuerung wertet den Ablauf des von dem Volumensensor detektierten zeitabhängigen Verdrängungsvorgangs aus und regelt den Aktor des Verdrängers.

Optional kann die erfindungsgemäße Mikrodosiervorrichtung weitere Elemente beinhalten, beispielsweise weitere Sensoren zur Messung des Druckverlaufs in der Druckkammer, die auch als Dosierkammer bezeichnet werden kann, der Medientemperatur, usw., um weitere physikalische Einflüsse bei der Regelung des Dosiervorgangs berücksichtigen zu können. Ferner kann ein aktives oder passives Ventil in den Reservoirkanal eingebaut sein, welches eine Rückströmung des Mediums von der Druckkammer zu dem Reservoir unterbindet.

Die erfindungsgemäße Mikrodosiervorrichtung kann ferner zur Pipettierung eines Fluids bzw. einer Flüssigkeit verwendet werden. Dazu wird ein Fluid über die Auslaßöffnung, die auch als Düse bezeichnet werden kann, aufgenommen, indem die Düse beispielsweise in ein zu pipettierendes Fluid eingetaucht wird. Nachfolgend wird das aufgenommene Fluid wie beschrieben wieder im Freistrahl abgegeben. Das Aufnehmen kann beispielsweise durch einen Unterdruck in dem Medienreservoir, der ein Einsaugen bewirkt, oder durch eine entsprechende Bewegung des Aktors erfolgen.

Die vorliegende Erfindung schafft ferner eine Pipettiervorrichtung, bei der durch eine entsprechende Bewegung des Aktors eine Aufnahme eines Fluids durch die Auslaßöffnung in die Dosierkammer bewirkt werden kann. Der Aufbau der Pipettiervorrichtung entspricht im wesentlichen dem Aufbau der erfindungsgemäßen Mikrodosiervorrichtung, wobei dieselbe jedoch das Medienreservoir und die dasselbe mit der Dosierkammer verbindende Fluidleitung nicht aufweist.

Die erfindungsgemäße Mikrodosiervorrichtung kann vorteilhaft verwendet werden, um ein Mikrovorrichtungsarray zu bilden, bei dem eine Mehrzahl der Mikrodosiervorrichtungen nebeneinander angeordnet und individuell adressierbar sind. In gleicher Weise kann die erfindungsgemäße Pipettiervorrichtung verwendet werden, um aus derselben ein Mikropipettiervorrichtungsarray zu schaffen.

Weiterbildungen der vorliegenden Erfindung sind in den abhängigen Ansprüchen dargelegt.

Bevorzugte Ausführungsbeispiele der vorliegenden Erfindung werden nachfolgend bezugnehmend auf die beiliegenden Zeichnungen näher erläutert. Es zeigen:

Fig. 1 eine schematische Querschnittdarstellung von Komponenten eines bevorzugten Ausführungsbeispiels der erfindungsgemäßen Mikrodosiervorrichtung;

Fig. 2 eine schematische Querschnittdarstellung des bei dem in Fig. 1 gezeigten Ausführungsbeispiel verwendeten Verdrängers;

Fig. 3 ein Diagramm, das ein Ansteuersignal zur Ansteuerung der Betätigungseinrichtung gemäß einem bevorzugten Ausführungsbeispiel der vorliegenden Erfindung zeigt;

Fig. 4 ein weiteres Ausführungsbeispiel von Komponenten einer erfindungsgemäßen Mikrodosiervorrichtung, bei der im Reservoirkanal ein Ventil angeordnet ist;

Fig. 5A und 5B schematische Querschnittdarstellungen eines Verdrängers zur zusätzlichen Druckerfassung;

Fig. 6A und 6B    schematische Darstellungen von Ausführungsbeispielen zur Realisierung der erfindungsgemäßen Mikrodosiervorrichtung; und

Fig. 7    ein Schema, das wesentliche Parameter des erfindungsgemäßen Verfahrens darstellt;

Fig. 8    eine auseinandergezogene schematische Darstellung eines Ausführungsbeispiels eines aus einer Mehrzahl von erfindungsgemäßen Mikrodosiervorrichtungen aufgebauten Mikrodosiervorrichtungsarrays; und

Fig. 9    eine schematische Darstellung des in Fig. 8 dargestellten Mikrodosiervorrichtungsarrays im zusammengesetzten Zustand.

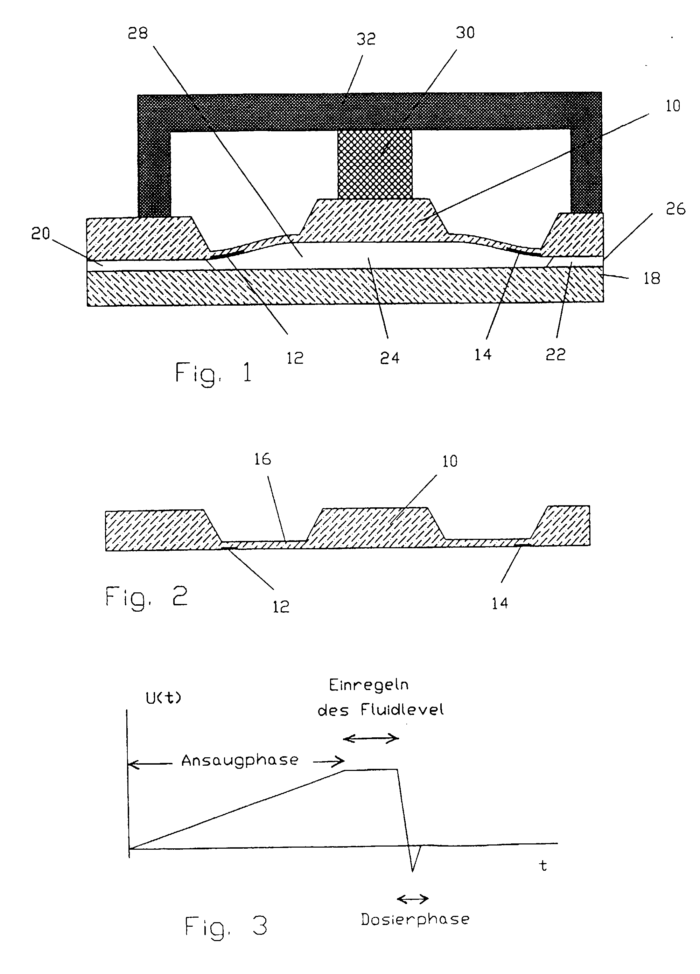

In Fig. 1 ist eine mögliche Ausführungsform der erfindungsgemäßen Mikrodosiervorrichtung, die sich speziell für eine Herstellung des Dosierelementes mittels der Verfahren der Halbleitertechnologie eignet, dargestellt. Der Medienverdränger 10 ist bei dem dargestellten Ausführungsbeispiel als eine in Silizium geätzte versteifte Membran realisiert. Der Volumensensor besteht bei diesem Ausführungsbeispiel aus in den Medienverdränger integrierten piezoresistiven Widerständen 12 und 14. Die aus einer bestimmten Verdrängerposition resultierende mechanische Spannung am Ort der Widerstände 12 und 14 in dem Medienverdränger 10 wird dabei über den piezoresistiven Effekt in ein elektrisches Signal umgewandelt.

In Fig. 2 ist eine vergrößerte Querschnittansicht der Verdrängerstruktur 10 dargestellt. Die in Fig. 2 dargestellte Verdrängerstruktur ist mittels eines anisotropen KOH-Ätzens hergestellt, das zu den trapezförmigen Ausnehmungen, die die Membran 16 definieren, führt.

Bei dem in Fig. 1 dargestellten Ausführungsbeispiel der vorliegenden Erfindung ist die Verdrängerstruktur 10 mittels eines anodischen Bondens mit einer Pyrexglas-Platte 18 verbunden. In der Siliziumscheibe, in der die Verdrängerstruktur 10 definiert ist, sind bei dem bevorzugten Ausführungsbeispiel Ausnehmungen vorgesehen, die einen Reservoirkanal 20, einen Düsenkanal 22 sowie eine Druckkammer 24 definieren. Der Düsenkanal 22 ist mit einer Auslaßöffnung 26 fluidmäßig verbunden. Die Auslaßöffnung 26 kann in der Form einer Düse ausgestaltet sein. Der Reservoirkanal 20 ist fluidmäßig mit einem Medienreservoir (nicht dargestellt) verbunden. Die Druckkammer 24 definiert ein durch eine Bewegung des Verdrängers regelbares Dosiervolumen 28. Eine piezoelektrische Betätigungseinrichtung, bei dem dargestellten Ausführungsbeispiel ein Piezostapel-Aktor 30, ist bei dem in Fig. 1 dargestellten Ausführungsbeispiel über ein Gegenlager 32 derart an der Mittenversteifung des Verdrängers angebracht, daß durch eine Ansteuerung des Piezostapels 30 der Medienverdränger 10 bewegt werden kann.

Die piezoresistiven Widerstände 12 und 14 sowie der Piezostapel 30 sind mit einer Steuereinrichtung (nicht dargestellt) elektrisch verbunden.

Die Druck- oder Dosier-Kammer 24, die Fluidleitungen 20, 22 und die Auslaßöffnung 26 können beispielsweise durch Standard-Ätztechniken in der Siliziumscheibe hergestellt sein. Durch ein anodisches Bonden der Siliziumscheibe auf eine Pyrexplatte (Glas) können die Dosierkammer und die Fluidleitungen hermetisch abgeschlossen werden. Alternativ könnte neben dem dargestellten Piezostapel-Aktor ein Piezo-Biegewandler oder eine Piezoplatte als Antrieb verwendet werden. Es ist jedoch offensichtlich, daß die vorliegende Erfindung nicht auf piezoelektrische Antriebe begrenzt ist, sondern auch andere Antriebe, beispielsweise elektromagnetische oder elektrostatische, verwendet werden können.

Vorzugsweise werden der Reservoirkanal, die Druckkammer, der Düsenkanal sowie die Verdrängermembran durch anisotrope KOH-Ätzungen, die zu trapezförmigen bzw. dreieckigen Kanalquerschnitten führen, hergestellt. Überdies sind jedoch andere beliebige Querschnittsformen möglich, beispielsweise Gräben mit senkrechten Wänden, die durch Trockenätztechniken erzeugt werden.

Neben dem oben beschriebenen Aufbau können die Kanäle und Ausnehmungen der mikromechanisch gefertigten Mikrodosiervorrichtung der vorliegenden Erfindung statt in Silizium auch in Pyrexglas strukturiert sein, wobei ferner eine Kombination einer Strukturierung in Silizium und Pyrexglas zur Realisierung verwendbar ist. Die Größe der bestimmenden Parameter, Flußwiderstand, fluidische Induktivität und Kapillardruck wird durch die Länge und die Ätztiefe der Kanäle bestimmt. Durch einen Mehrfachmaskenprozeß können die Ätztiefe der beiden Kanäle und der Druckkammer unabhängig voneinander variiert werden.

Wie in Fig. 1 dargestellt ist, wird als Medienverdränger 10 vorzugsweise eine mittenversteifte Membran 16 verwendet. Dabei kann die Mittenversteifung vorzugsweise als Ansatzfläche für den Aktor 30 verwendet werden. Bei der Verwendung einer versteiften Membran als Medienverdränger 10 kann bei gegebenem Stellweg des Aktors über die Membranweite der Dosierbereich angepaßt werden.

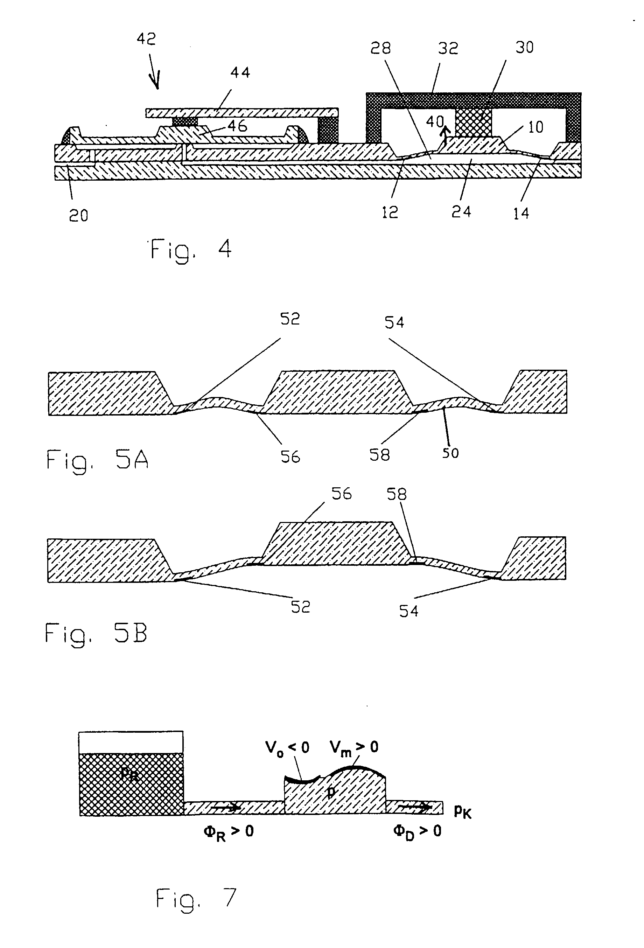

Anhand Fig. 3 wird nachfolgend ein Dosiervorgang gemäß einem bevorzugten Ausführungsbeispiel der vorliegenden Erfindung näher erläutert.

Zunächst erfolgt eine erstmalige Befüllung der Anordnung, d.h. der Fluidleitungen 20 und 22 sowie der Druckkammer 24 entweder selbständig durch Kapillarkräfte oder mittels einer externen Unterstützung durch Druckbeaufschlagung des Medienreservoirs, Einpumpen des Mediums oder Einsaugen der Flüssigkeit, beispielsweise durch eine Erzeugung eines Vakuums an der Auslaßöffnung. Am Ort der Auslaßöffnung, oder Düse, wird das Austreten des Mediums durch die Oberflächenspannung verhindert, während eine Rückströmung des Mediums in Richtung der Dosierkammer durch Kapillarkräfte verhindert wird. Der Flüssigkeitsmeniskus regelt sich also selbst auf die Position der Düse ein. Nach der erstmaligen Befüllung, die beispielsweise nur bei einem ersten Dosiervorgang nach einer länger anhaltenden Ruhephase der erfindungsgemäßen Dosiervorrichtung durchgeführt werden muß, werden die im Folgenden beschriebenen Schritte durchgeführt.

Während eines in Fig. 3 als Ansaugphase bezeichneten Intervalls wird zunächst ein Ansteuersignal, U(t), mit einer geringen Flankensteilheit an die Betätigungsvorrichtung angelegt. Dies bewirkt eine langsame Bewegung der Membran aus der Ausgangslage, durch die Dosierflüssigkeit von beiden Kanälen her, Düsenseite und Reservoirseite, in die Dosierkammer angesaugt wird. Die geringe Flankensteilheit des Ansteuersignals bewirkt, daß der zu dosierenden Flüssigkeit eine geringe Beschleunigung vermittelt wird. Je nach Fließwiderstand und Kapillardruck der einzelnen Kanäle saugt die Membran unterschiedliche Teilvolumina aus den beiden Kanälen. Die Flüssigkeitsträgheit ist wegen des langsamen Vorgangs zu vernachlässigen. Bei dem Vorgang ist jedoch darauf zu achten, daß der Düsenkanal nicht vollständig entleert wird, und somit Luft in die Dosierkammer gerät. Dies kann sichergestellt werden, indem die Ansteuerung des Aktors, d.h. die Flankensteilheit des Ansteuersignals, der Relation der Strömungswiderstände der mit dem Medienreservoir verbundenen Fluidleitung und der mit der Düse verbundenen Fluidleitung angepaßt wird. Dieser Vorgang der langsamen Bewegung der Membran aus der Ausgangslage ist abgeschlossen, wenn durch den integrierten Volumensensor der Steuereinrichtung das Erreichen der gewünschten Volumenstellung gemeldet wird.

Nachfolgend erfolgt bei dem in Fig. 3 dargestellten Ausführungsbeispiel des erfindungsgemäßen Verfahrens eine Phase, die mit "Einregeln des Fluidlevels" bezeichnet ist. Diese Einregelung des Flüssigkeitsmeniskus auf das Düsenende erfolgt infolge von Kapillarkräften und Oberflächenspannungen selbsttätig, nachdem der Verdränger die gewünschte Volumenstellung erreicht hat. Die Dauer dieses Vorgangs wird bestimmt durch den Strömungswiderstand der Kanäle und eventuell der Dosierkammer, wobei jedoch der Strömungswiderstand der Dosierkammer im Vergleich zum Strömungswiderstand der Kanäle in den meisten Fällen vernachlässigbar ist, die physikalischen Eigenschaften des Mediums, d.h. der Viskosität, und dem hydrostatischen Druck in dem Reservoir. Diese Phase des Einregelns des Fluidlevels ist optional, da dieselbe entfallen kann, wenn die Ansaugphase genügend langsam erfolgt, wobei sich in diesem Fall der Flüssigkeitsmeniskus stets am Ort der Düse befindet.

In einer dritten Phase, die in Fig. 3 mit "Dosierphase" bezeichnet ist, wird der Verdränger durch eine geeignete Ansteuerung der Betätigungseinrichtung durch die Steuereinrichtung nun sehr rasch in dessen Ausgangslage zurückgestellt. Dies wird durch ein Ansteuersignal mit einer großen Flankensteilheit, durch das der Flüssigkeit eine große Beschleunigung vermittelt wird, realisiert. Dadurch wird Flüssigkeit über die Düse als freier Strahl ausgestoßen. Die Bewegung der Flüssigkeit im Reservoir- und im Düsen-Kanal ist unter diesen Umständen nahezu ausschließlich von der Relation der Flüssigkeitsträgheit in den betreffenden Fluidleitungen bestimmt, wohingegen die Relation der Strömungswiderstände vernachlässigbar ist. Wenn die Trägheit der Flüssigkeit in der Fluidleitung zwischen der Dosierkammer und der Düse klein gegenüber der Trägheit der Flüssigkeit in der Fluidleitung zwischen der Dosierkammer und dem Reservoir ist, so ist die Rückströmung von Flüssigkeit in das Reservoir vernachlässigbar. Ist die Trägheit der Flüssigkeit in dem Reservoirkanal hingegen nicht vernachlässigbar, so kann die damit verbundene Rückströmung durch eine Kalibrierung bestimmt und bei einer nachfolgenden Dosierung kompensiert werden. Dies ist möglich, da die Induktivität L, d.h. die Trägheit, einer Fluidleitung lediglich von deren Geometriedaten, L = Leitungslänge/Leitungsquerschnitt, nicht aber von den physikalischen Eigenschaften der in derselben enthaltenen Flüssigkeit abhängt.

Der Anteil der beschleunigten Flüssigkeitsmenge in Düsenrichtung und Reservoirrichtung bei schnellen Änderungen des Verdrängers, d.h. bei einer Vernachlässigung von Strömungswiderständen, ist gegeben durch:

$$\frac{d\Phi_d}{d\Phi_r} = \frac{\frac{d\Phi_d}{dt}}{\frac{d\Phi_r}{dt}} = \frac{\frac{\Delta p_d}{\rho L_d}}{\frac{\Delta p_r}{\rho L_r}} = \frac{\Delta p_d\, L_r}{\Delta p_r\, L_d} \approx \frac{L_r}{L_d} \qquad \text{(Gl.1)}$$

wobei $\phi_d$ und $L_d$ den Volumenstrom beziehungsweise die Induktivität in Düsenrichtung angeben, und $\phi_r$ und $L_r$ den Volumenstrom bzw. die Induktivität in Reservoirrichtung angeben.

In der Regel sind der Umgebungsdruck und der Druck im Reservoir, der einige mbar betragen kann, beide vernachlässigbar gegen die in der Dosierkammer bei einer schnellen Änderung des Verdrängers anliegenden Drücke, die mehrere bar betragen können. Dadurch sind die Druckdifferenzen $\Delta p_d$ und $\Delta p_r$ nahezu identisch, weshalb die Anteile der Flüssigkeitsströmungen in Düsenrichtung bzw. in Rückwärtsrichtung in einer festen Relation stehen. Diese Relation ist unabhängig von der Viskosität und der Dichte $\rho$ der enthaltenen Flüssigkeit. Daher kann das durch die Rückströmung durch den Reservoirkanal verlorengehende Volumen in der ersten Phase des Dosiervorgangs, d.h. das langsame Bewegen des Verdrängers zur Erhöhung des Druckkammervolumens, einfach berücksichtigt werden.

Ein potentielles Überschwingen des Verdrängers über die Ruhelage hinaus kann beispielsweise unterbunden werden, indem während des Ausstoßes des Flüssigkeitsstrahls das erfaßte zeitabhängige Signal des Volumensensors durch die Steuereinrichtung detektiert und analysiert wird. Dadurch ist ein regelnder Eingriff in den laufenden Dosiervorgang möglich, was jedoch eine aufwendige Elektronik erfordert. Alternativ kann das durch den Volumensensor erfaßte Signal auch nach dem Ausstoßvorgang analysiert werden und kann für eine Optimierung der Ansteuerparameter der Betätigungseinrichtung in nachfolgenden Dosierzyklen dienen.

Die Steuereinrichtung der erfindungsgemäßen Mikrodosiervorrichtung steuert die Betätigungsvorrichtung somit auf der Grundlage der jeweils während eines aktuellen Zyklusses von dem Volumensensor, d.h. dem Sensor zur Erfassung der Stellung der Membran, empfangenen Signale oder auf der Grundlage der während zumindest einem vorhergehenden Zyklus erfaßten Sensorsignale.

In Fig. 4 ist ein alternatives Ausführungsbeispiel einer erfindungsgemäßen Mikrodosiervorrichtung dargestellt, bei der in dem Kanal zwischen der Druckkammer und dem Medienreservoir ein Ventil angeordnet ist. Elemente, die denen in Fig. 1 entsprechen, sind in Fig. 4 mit identischen Bezugszeichen bezeichnet. Der Pfeil 40 in Fig. 4 zeigt die Bewegung des Medienverdrängers 10 aus der dargestellten Ruhelage an. Wie in Fig. 4 dargestellt ist, ist ein Ventil, das allgemein mit dem Bezugszeichen 42 bezeichnet ist, angeordnet, um einen Verschluß der mit dem Medienreservoir (nicht dargestellt) fluidmäßig verbundenen Fluidleitung 20 zu ermöglichen. Das in Fig. 4 dargestellte Ventil 42 ist ein in der Technik übliches mittels eines piezoelektrischen Antriebs 44 betreibbares Ventil, bei dem die Fluidleitung 20 durch eine mittels des Antriebs 44 bewegbare Membran 46 verschlossen werden kann.

Alternativ zu dem in Fig. 4 dargestellten Ausführungsbeispiel kann jedes geeignete bekannte aktive oder passive Ventil zur Unterbindung einer Rückströmung durch den Reservoirkanal 20 beim Ausstoßen des Flüssigkeitsstrahls durch die Düse verwendet sein. Ein derartiges Ventil ist nicht notwendig, wenn das Volumen der rückströmenden Flüssigkeit infolge der höheren Flüssigkeitsträgheit in die Richtung des Reservoirs zu vernachlässigen ist, wie es bei Tintendruckköpfen der Fall ist. Ferner kann auf ein derartiges Ventil verzichtet werden, wenn die Menge des Flüssigkeitsvolumens eine feste Relation mit dem zu dosierenden Volumen darstellt und somit über die Volumenauslenkung des Verdrängers korrigiert werden kann, siehe oben.

Die Bewegung des Verdrängers beim Ausstoßen der Flüssigkeit kann direkt in die Ruhelage erfolgen. Alternativ kann, wie wiederum in Fig. 3 dargestellt ist, die Bewegung des Verdrängers beim Ausstoßen der Flüssigkeit mit einer geringen Gegenbewegung abgeschlossen werden, siehe Ende der Dosierphase. Durch diese Gegenbewegung tritt eine Gegenbeschleunigung auf, die den Abriß des Flüssigkeitsstrahls begünstigen kann.

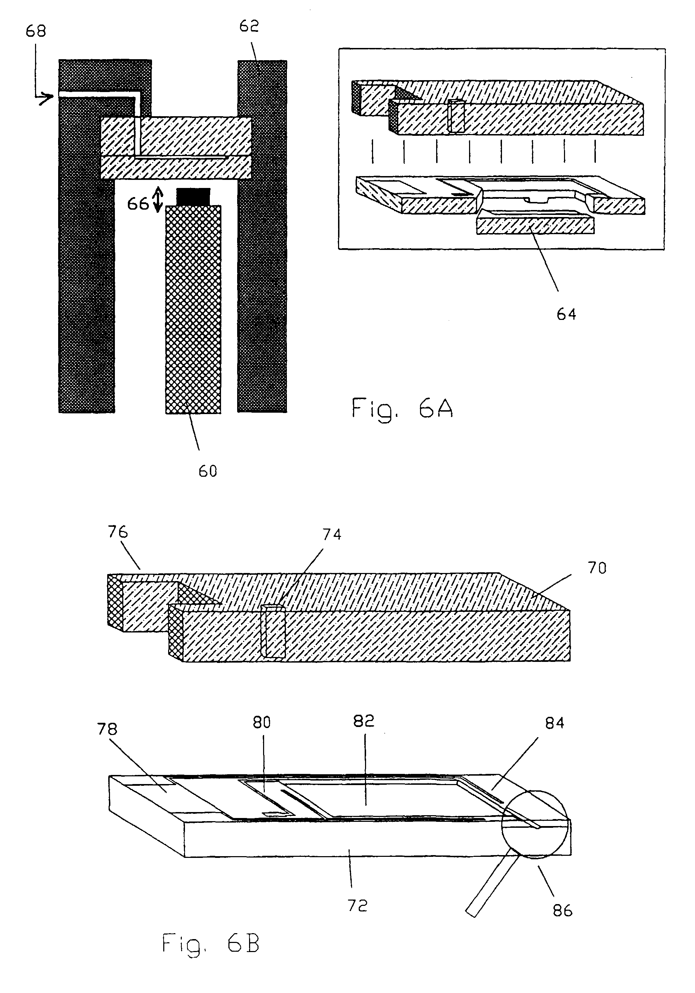

Bezugnehmend auf die Fig. 5A und 5B wird nachfolgend ein alternatives Ausführungsbeispiel eines Medienverdrängers näher beschrieben. Die Volumenverdrängung des Medienverdrängers und der Druck in der Dosierkammer sind zwei unabhängige physikalische Parameter. Durch eine geeignete Plazierung und Verschaltung von mehreren verschiedenen Widerständen in der Membranaufhängung des Verdrängers kann somit entweder druckunabhängig die Volumenstellung des Verdrängers oder volumenunabhängig der Druck in der Dosierkammer gemessen werden. Eine derartige Anordnung von piezoresistiven Widerständen ist in den Fig. 5A und 5B dargestellt. In der Membranaufhängung 50 sind vier piezoresistive Widerstände 52, 54, 56 und 58 implementiert. Fig. 5A zeigt die mechanische Verformung der Membran im Falle eines Überdrucks in der Dosierkammer bei vernachlässigbarem Verdrängervolumen. Fig. 5B zeigt die mechanische Verformung der Membran im Falle einer Verdrängung bei verschwindendem Druck, beispielsweise am Ende der oben beschriebenen Phase "Einregeln des Fluidlevels".

Obwohl die Signale der jeweils äußeren Widerstände nahezu gleich sind, unterscheiden sich die beiden Fälle in dem Vorzeichen der mechanischen Spannungen nahe der Mittenversteifung der Membran. Bei dem in Fig. 5A dargestellten Fall wirken auf alle vier piezoresistiven Widerstände Zugspannungen. Bei dem in Fig. 5B dargestellten Fall, wirken auf die piezoresistiven Widerstände 52 und 54 Zugspannungen, während auf die piezoresistiven Widerstände 56 und 58 Druckspannungen wirken. Zugspannungen werden durch den Druck in der Dosier-kammer erzeugt, während reine Volumenverformungen Druckspannungen erzeugen. Bei einer Verwendung des piezoresistiven Effekts äußert sich dies in einem unterschiedlichen Vorzeichen bei der Widerstandsänderung. Daher können durch die geeignete Plazierung und Auswertung der Widerstände beide physikalischen Größen, d.h. Druck und Volumen, unabhängig voneinander bestimmt werden.

Im Folgenden werden weitere alternative Ausführungsbeispiele der erfindungsgemäßen Mikrodosiervorrichtung dargelegt. Im Ausgangszustand des Dosierzyklusses kann der Verdränger vorgespannt sein und durch den Aktor in dieser Lage gehalten werden, beispielsweise in die Dosierkammer hineingedrückt. Der Verdränger läßt sich dabei in Richtung einer weiteren Vorspannung durch eine weitere Auslenkung des Aktors bewegen. Entgegen der Vorspannungsrichtung bewegt sich der Verdränger bei nachlassender Aktorauslenkung allein durch seine Rückstellkraft. Durch diese Variante ist keine feste Verbindung zwischen Aktor und Verdränger notwendig. Eine potentielle Klebeverbindung zwischen Aktor und Verdränger entfällt und der Montageaufwand reduziert sich erheblich. Bezüglich des in den Verdränger integrierten Volumensensors ist dabei lediglich der durch die Vorspannung verursachte Volumenoffset zu korrigieren.

Die oben beschriebene Alternative, Aktor und Verdränger ohne feste Verbindung zu verwenden, ermöglicht einen modularen Aufbau des Dosierelements. Ein solcher Aufbau ist zur Veranschaulichung in den Fig. 6A und 6B dargestellt. Dabei sind die Elektronik und der Antrieb, beispielsweise ein PiezoStapelaktor 60 fest in einem Gehäuse 62 eingebaut, während ein Chip 64, der den Medienverdränger und die Sensoren aufweist, auswechselbar ist. Durch den Pfeil 66 in Fig. 6A ist die Bewegungsrichtung des Piezo-Stapelaktors angegeben. Ferner ist in Fig. 6A eine Fluidleitung 68, die durch das Gehäuse verläuft, dargestellt. Der rechtsseitige Teil von Fig. 6A stellt eine Vergrößerung der mikromechanisch gefertigten Komponenten der Mikrodosiervorrichtung dar, wobei die Pyrexplatte und der Siliziumchip getrennt dargestellt sind.

Eine Vergrößerung dieser mikromechanisch gefertigten Komponenten der Mikrodosiervorrichtung ist in auseinandergezogener Form in Fig. 6B dargestellt. Diese Komponenten sind durch eine Pyrexplatte 70, die beispielsweise mittels anodischem Bonden mit einem Siliziumchip 72 verbunden ist, gebildet. Eine Fluidleitung 74, die mit einem Medienreservoir (nicht dargestellt) fluidmäßig verbunden ist, verläuft durch die Pyrexglasplatte 70. Die Pyrexglasplatte 70 weist ferner eine Ausnehmung 76 auf, um eine elektrische Kontaktierung von Anschlußflächen 78 auf dem Siliziumchip zu ermöglichen. Der Reservoirkanal ist bei 80 dargestellt, während die Dosierkammer bei 82 gezeigt ist. Auf dem Siliziumchip 72 sind ferner Leitungsbahnen 84 zu den Volumensensoren vorgesehen. Mittels einer weiteren Vergrößerung 86 ist in Fig. 6B das Auslaßende oder die Düse der Mikrodosiervorrichtung schematisch dargestellt.

Bei der beschriebenen modularen Konfiguration ist es vorteilhaft, wenn zwischen dem Aktor und dem Verdränger keine Klebeverbindung, sondern lediglich ein mechanischer Kontakt zur Erzeugung einer Vorspannung, wie oben beschrieben wurde, notwendig ist. Über das Signal der integrierten Volumensensoren läßt sich die Vorspannung gleichzeitig reproduzierbar und mit hoher Genauigkeit einstellen.

Bei allen beschriebenen Ausführungsbeispielen können durch den integrierten Volumensensor Nichtlinearitäten und beispielsweise Hystereseeffekte beim Antrieb des Verdrängers kompensiert werden. Ferner ist eine Beschichtung der Düse mit einem hydrophoben Material vorteilhaft, da dadurch die Oberflächenspannung erhöht wird und ein Austreten von Flüssigkeit durch die Düse im Ruhezustand weiter unterdrückt wird. Diesbezüglich ist insbesondere eine Beschichtung außerhalb der Düse in der Umgebung entlang des Umfangs derselben mit einem hydrophoben Material vorteilhaft.

Alternativ zu den beschriebenen Volumensensoren in dem Medienverdränger kann der Volumensensor auch in der Betätigungsvorrichtung für den Verdränger integriert sein. Beispielsweise kann der Volumensensor als Dehnungsmeßstreifen auf dem Piezostapelaktor realisiert sein, der die Auslenkung desselben detektiert.

Wie erwähnt kann die erfindungsgemäße Mikrodosiervorrichtung auch als Pipettiereinrichtung verwendet werden. Zu diesem Zweck weist die dieselbe vorzugsweise eine Einrichtung zum Erzeugen eines Unterdrucks in dem Medienreservoir auf, um dadurch durch das Eintauchen der Auslaßöffnung, d.h. der Düse, in eine zu pipettierende Flüssigkeit ein Ansaugen einer Flüssigkeit durch die Auslaßöffnung in die Dosierkammer und/oder in das Medienreservoir zu ermöglichen. Jedoch kann die zu pipettierende Flüssigkeit auch durch eine entsprechende Bewegung des Aktors und damit des Verdrängers in die Dosierkammer angesaugt werden, wobei dann das Vorsehen des Medienreservoirs und der Fluidleitung zwischen dem Medienreservoir und der Dosierkammer nicht notwendig ist. Bezüglich der übrigen Merkmale und der Ausgestaltung derselben entspricht die Pipettiereinrichtung der Mikrodosiereinrichtung gemäß der vorliegenden Erfindung, wobei die Steuereinrichtung die Betätigungseinrichtung, d.h. den Aktor, auf der Grundlage der Signale von dem Sensor zur Erfassung der Stellung des Verdrängers während des gegenwärtigen Pipettierzyklusses oder auf der Grundlage der Sensorsignale während zumindest eines vorherigen Zyklusses steuert, um das Ansaugen und/oder das Ausstossen eines definierten Fluidvolumens durch die Auslaßöffnung zu bewirken.

Die Auslaßöffnung der erfindungsgemäßen Vorrichtungen kann alternativ als ein Düsenarray ausgebildet sein, das aus beispielsweise 10 Düsen besteht. Dadurch ist es möglich, ein Array von Flüssigkeitsstrahlen zu erzeugen, wobei jeder einzelne Strahl nur ein Zehntel des gesamten Dosiervolumens enthält. Dadurch ergibt sich die Funktionalität sogenannter Mehrkanal-Pipetten, die zu Dosierung in sogenannte Mikrotiterplatten verwendet werden. Ferner wirkt bei mehreren kleinen Düsen im Vergleich zu einer großen Düse eine größere Kapillarkraft auf die Austrittsseite, wodurch eine Rückströmung beim Ansteuern mit einem Signal geringer Flankensteilheit reduziert wird.

Bei alternativen Ausführungsbeispielen der vorliegenden Erfindung kann neben der beschriebenen planaren Anordnung von Düse und Chip auch eine vertikale Anordnung der Düse zu dem Chip implementiert sein, bei der der Ausstoß des Fluids aus der Düse senkrecht zu dem Chip stattfindet. Eine vertikale Anordnung ist vorteilhaft dahingehend, daß die Dosiervorrichtung, d.h. der Aktor, der Chip und die Düse, axial aufgebaut sein kann, wie dies der Gewohnheit von Anwendern beispielsweise üblicher Pipetten entspricht.

Im Folgenden wird vereinfacht die Dynamik des Dosiervorgangs dargestellt. Dabei sei ein Strömungswiderstand als R und eine fluidische Induktivität als L definiert. Der Druckabfall über einen Strömungskanal setzt sich aus einem Druckabfall $\Delta p_{laminar}$, der dazu dient den Strömungswiderstand zu überwinden, und einen Druckabfall $\Delta p_{träge}$, der die Flüssigkeit im Kanal beschleunigt, zusammen. Somit gilt für die Druckdifferenz $\Delta p_{Leitung}$ über die gesamte Fluidleitung:

$$\Delta p_{leitung} = \Delta p_{laminar} + \Delta p_{träge}$$

$$\Delta p_{träge} = \rho\ L\ \frac{d\Phi}{dt} \qquad mit \quad L = \frac{l}{A} \qquad\qquad (Gl.2)$$

$$\Delta p_{laminar} = \rho\ R\ \Phi$$

Der Strömungswiderstand R und die fluidische Induktivität L rechnen sich beispielsweise für einen runden Schlauch mit dem Radius r zu:

$$L = \frac{l}{r^2\pi};\ R = \frac{8\eta l}{\rho\pi r^4} \qquad\qquad (Gl.3)$$

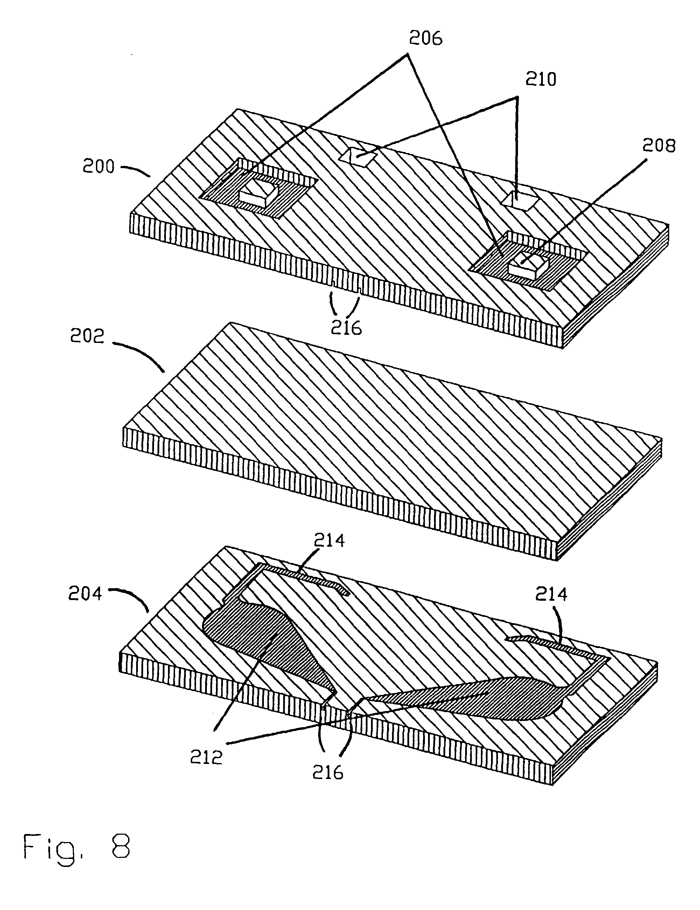

In Fig. 7 ist ein Schema zur Beschreibung der Dynamik einer erfindungsgemäßen Mikrodosiervorrichtung dargestellt. $p_R$ stellt den Druck im Medienreservoir dar, $p_K$ den Kapillardruck und $p$ den Druck in der Druckkammer. $V_m$ entspricht dem von der Membran verdrängten Volumen, während $V_0$ der Änderung des Kammervolumens entspricht, die sich durch Verspannungen des Gehäuses und andere Störeinflüsse ergibt. $\phi_r$ ist der Volumenfluß im Reservoirkanal und $\phi_D$ ist der Fluß im Düsenkanal. In den nachfolgenden Gleichungen entspricht U der Steuerspannung an dem Aktor.

Für die Fluidleitung zwischen der Dosierkammer und dem Reservoir gilt:

$$p_R - p = \rho\ R_R\ \Phi_R + \rho\ L_R\ \frac{d\Phi_R}{dt} \qquad\qquad (Gl.4)$$

Für die Fluidleitung zwischen der Dosierkammer und der Düse gilt:

$$p + p_K - p_{Atmosphäre} = \rho\ R_D\ \Phi_D + \rho\ L_D\ \frac{d\Phi_D}{dt} \qquad\qquad (Gl.5)$$

Für die Dosierkammer gilt:

$$\frac{dV}{dt} = \Phi_R - \Phi_D$$

$$\frac{d}{dt}(V_m + V_o) = \frac{\partial V_m}{\partial p}\Big|_U \frac{dp}{dt} + \frac{\partial V_m}{\partial U}\Big|_p \frac{dU}{dt} + \frac{\partial V_o}{\partial p} \frac{dp}{dt} = \Phi_R - \Phi_D$$

und damit

$$\frac{dp}{dt} = \frac{\Phi_R - \Phi_D - \dfrac{\partial V_m}{\partial U}\Big|_p \dfrac{dU}{dt}}{\dfrac{\partial V_m}{\partial p}\Big|_U + \dfrac{\partial V_o}{\partial p}} \qquad\qquad (Gl.6)$$

Zusammenfassend kann festgestellt werden, daß die Dynamik des Dosierelements näherungsweise durch drei Differentialgleichungen für die drei unabhängigen Variablen $\phi_R$, $\phi_D$ und $p$ wie folgt beschrieben wird:

$$\frac{dp}{dt} = \frac{\Phi_R - \Phi_D - \frac{\partial V_m}{\partial U}\big|_p \frac{dU}{dt}}{\frac{\partial V_m}{\partial p}\big|_U + \frac{\partial V_o}{\partial p}}$$

$$\frac{d\Phi_R}{dt} = \frac{p_R - p - \rho R_R \Phi_R}{\rho L_R}$$

$$\frac{d\Phi_D}{dt} = \frac{p + p_K - \rho R_D \Phi_D}{\rho L_D} \qquad\qquad (Gl.7)$$

Als Designvorgaben sind bekannt: $R_R$, $R_D$, $L_R$, $L_D$. Betriebsparameter sind die Spannung U(t) und der Medienreservoirdruck $p_R$. Zu Messen ist der Druck $p_K$ und zu messen oder zu berechnen sind $dV_m/dp$, $dV_0/dp$ und $dV_m/dU$.

Das Differentialgleichungssystem ist für ein vorgegebenes U(t) für die folgenden Randbedingungen zu lösen:

$$p(t=0) = 0;$$

$$\phi_R(t=0) = 0;$$

und

$$\phi_D(t=0) = 0.$$

Ein Mikrodosiervorrichtungsarray kann aus einer Mehrzahl der erfindungsgemäßen Mikrodosiervorrichtungen, die arrayartig angeordnet sind, aufgebaut sein. Die Mikrodosiervorrichtungen können dabei beipielsweise parallel nebeneinander angeordnet sein. Dabei ist es möglich, beispielsweise vier Düsen innerhalb einer Fläche von weniger als einem Quadratmillimeter anzuordnen und individuell zu adressieren. Jede Mikrodosierungsvorrichtung gibt dabei getrennt von den anderen ein Medium im Freistrahl aus, so daß unterschiedliche Medien ausgegeben werden können. Durch die Anordnung der Mehrzahl von Mikrodosiervorrichtungen ist es dann möglich, daß sich die getrennt ausgegebenen Medien nach Verlassen des Mikrodosiervorrichtungsarrays in der Luft vermengen. Das Mikrodosiervorrichtungsarray schafft somit eine sehr vielseitige Möglichkeit sowohl reine Medien als auch ein Gemisch von Medien zu dosieren. Bei der Dosierung eines Gemischs können jeweils die einzelnen Medienbestandteile durch die einzelnen Mikrodosiervorrichtungen exakt dosiert werden.

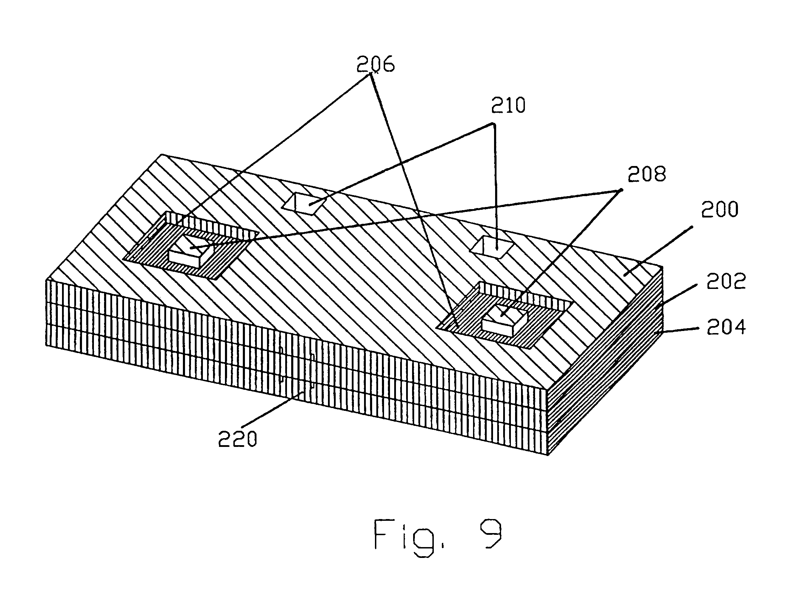

Ein Ausführungsbeispiel für ein erfindungsgemäßes Mikrodosiervorrichtungsarray ist in den Fig. 8 und 9 dargestellt.

Wie in Fig. 8 dargestellt ist, kann ein erfindungsgemäßes Mikrodosiervorrichtungsarray aus einer Struktur, die eine erste Siliziumschicht 200, eine Pyrex-Glasplatte 202 und eine zweite Siliziumschicht 204 umfaßt, gebildet sein. In der ersten Siliziumschicht 200 sind bei dem dargestellten Ausführungsbeispiel die Strukturen für zwei Mikrodosiervorrichtungen gebildet. Dazu sind zwei Verdrängermembranen 206, die jeweils eine Versteifung 208 aufweisen, in der Siliziumschicht 200 gebildet. Die Verdrängermembranen 206 sind über die Versteifungen 208 betätigbar. Ferner sind Fluidkanäle 210, die die Druckkammer mit einem Medienreservoir (nicht dargestellt) verbinden, in der ersten Siliziumschicht angeordnet.

Der Aufbau der zweiten Siliziumschicht 204 ist im wesentlichen identisch zu dem der ersten Siliziumschicht 200. In Fig. 8 ist die zu der bezüglich der ersten Schicht 200 dargestellten Oberfläche gegenüberliegende Oberfläche der zweiten Siliziumschicht 204 zu sehen. Somit sind hinsichtlich der zweiten Siliziumschicht 204 die in derselben gebildeten Druckkammern 212 und die die Druckkammern 212 mit einem Medienreservoir verbindenden Fluidleitungen 214 zu erkennen. Die Fluidleitungen 214 einer jeweiligen Siliziumschicht münden dabei in die Fluidkanäle 210 der jeweiligen Schicht. In Fig. 8 sind ferner die Fluidleitungen dargestellt, die die Druckkammern mit einer jeweiligen Auslaßöffnung 216 verbinden.

Die Pyrexglasplatte 202 wird zwischen den beiden Siliziumschichten 200 und 204 angeordnet, derart, daß jeweilige Hauptoberflächen derselben jeweils mit der Oberfläche der ersten und der zweiten Siliziumschicht, in der die Druckkammern 212 gebildet sind, verbunden werden. Die Druckkammern und die Fluidleitungen sind somit jeweils durch die Strukturen in den Siliziumschichten und die Oberflächen der Pyrex-Glasplatte gebildet.

Die dadurch gebildete Struktur, die in Fig. 9 dargestellt ist, weist ein Düsenarray 220 auf, das durch die vier Auslaßöffnungen 216 in der ersten und der zweiten Siliziumscheibe gebildet ist. Jeder Düse des 2x2-Arrays 220 ist eine Verdrängermembran 206 mit zugehöriger Betätigungseinrichtung (in Fig. 8 und 9 nicht dargestellt) zugeordnet, so daß die Düsen einzeln adressierbar sind.

Es ist offensichtlich, daß unter Verwendung des oben beschriebenen Aufbaus Mikrodosiervorrichtungsarrays mit einer nahezu beliebigen Anzahl von Mikrodosiervorrichtungen aufgebaut werden können. Überdies ist es offensichtlich, daß die Fluidkanäle der jeweiligen Druckkammern entweder mit dem gleichen oder mit unterschiedlichen Medienreservoiren verbunden sein können. Daneben ist es in entsprechender Weise möglich, unter Verwendung einer Mehrzahl von erfindungsgemäßen Pipettiervorrichtungen ein Pipettiervorrichtungsarray aufzubauen.

**Patentansprüche**

1. Mikrodosiervorrichtung mit folgenden Merkmalen:

   einer Druckkammer (24), die zumindest teilweise von einem Verdränger (10) begrenzt ist;

   einer Betätigungseinrichtung (30) zum Betätigen des Verdrängers (10), wobei durch die Betätigung des Verdrängers (10) das Volumen (28) der Druckkammer (24) veränderbar ist;

   einem Medienreservoir, das über eine erste Fluidleitung (20) fluidmäßig mit der Druckkammer (24) verbunden ist;

   einer Auslaßöffnung (26), die über eine zweite Fluidleitung (22) fluidmäßig mit der Druckkammer (24) verbunden ist;

   eine Einrichtung (12, 14) zum Erfassen der Stellung des Verdrängers (10); und

   eine Steuereinrichtung, die mit der Betätigungseinrichtung (30) und der Einrichtung (12, 14) zum Erfassen des Stellung des Verdrängers (10) verbunden ist und die Betätigungseinrichtung (30) auf der Grundlage der erfaßten Stellung des Verdrängers (10) oder auf der Grundlage während zumindest eines vorherigen Dosierzyklusses erfaßter Stellungen des Verdrängers (10) steuert, um den Ausstoß eines definierten Fluidvolumens aus der Auslaßöffnung (26) zu bewirken,

   dadurch gekennzeichnet,

   daß die Steuereinrichtung Mittel zum Ansteuern der Betätigungsvorrichtung (30) mit einem Signal geringer Flankensteilheit aufweist, um eine Bewegung des Verdrängers (10) aus einer ersten Stellung in eine vorbestimmte zweite Stellung zu bewirken, wobei die zweite Stellung des Verdrängers (10) ein größeres Volumen der Druckkammer (24) definiert als die erste Stellung; und

   daß die Steuereinrichtung Mittel zum Ansteuern der Betätigungsvorrichtung (30) mit einem Signal großer Flankensteilheit aufweist, um eine Bewegung des Verdrängers (10) aus der zweiten Stellung in die erste Stellung zu bewirken, um dadurch ein definiertes Fluidvolumen aus der Auslaßöffnung (26) auszustoßen.

2. Mikrodosiervorrichtung gemäß Anspruch 1, bei der in der Fluidleitung (20) zwischen dem Medienreservoir und der Druckkammer (24) ein aktives oder passives Ventil (42) zur Verhinderung einer Fluidrückströmung von der Druckkammer (24) zu dem Medienreservoir angeordnet ist.

3. Mikrodosiervorrichtung gemäß Anspruch 1 oder 2, bei der die Druckkammer (24), der Verdränger (10) und die Einrichtung (12, 14) zum Erfassen der Stellung des Verdrängers (10) als mikromechanisch gefertigte Strukturen ausgebildet sind.

4. Mikrodosiervorrichtung gemäß Anspruch 3, bei der der Verdränger (10) als eine in einen Siliziumwafer geätzte versteifte Membran realisiert ist, und bei der die Einrichtung zum Erfassen der Stellung des Verdrängers (10) durch in oder an der Membran befindliche piezoresistive Elemente (12, 14) realisiert ist.

5. Mikrodosiervorrichtung gemäß Anspruch 4, bei der zumindest Teile der ersten und der zweiten Fluidleitung (20, 22), die Auslaßöffnung (26) und die Druckkammer (24) durch Strukturen in dem Siliziumwafer und/oder einer Pyrexglasscheibe (18), die mit dem Siliziumwafer verbunden ist, definiert sind.

6. Mikrodosiervorrichtung gemäß einem der Ansprüche 1 bis 5, bei der in der Druckkammer (24) ferner Einrichtungen zum Erfassen des Drucks in der Druckkammer (24) angeordnet sind.

7. Mikrodosiervorrichtung gemäß Anspruch 3, bei der die Betätigungseinrichtung (30) ein Piezostapelaktor ist, wobei die Einrichtung zur Erfassung der Stellung des Verdrängers (10) durch einen auf dem Piezostapelaktor (30) angebrachten Dehnungsmeßstreifen realisiert ist.

8. Mikrodosiervorrichtung gemäß einem der Ansprüche 1 bis 7, bei der die äußere Umrandung der Auslaßöffnung (26) mit einem hydrophoben Material beschichtet ist.

9. Mikrodosiervorrichtung gemäß einem der Ansprüche 3 bis 8, bei der die Betätigungseinrichtung (60) und die Steuereinrichtung fest in ein Gehäuse (62) eingebaut sind, während die Druckkammer (24), der Verdränger (10) und die Einrichtung zum Erfassen der Stellung des Verdrängers auswechselbar in das Gehäuse installierbar sind.

10. Mikrodosiervorrichgung gemäß einem der Ansprüche 1 bis 9, bei der die Auslaßöffnung (26) durch ein Array einer Mehrzahl von Öffnungen gebildet ist.

11. Mikrodosiervorrichtung gemäß einem der Ansprüche 1 bis 10, die ferner eine Einrichtung zum Erzeugen eines Unterdrucks in dem Medienreservoir aufweist.

12. Mikrodosiervorrichtungsarray aus einer Mehrzahl von Mikrodosiervorrichtungen nach einem der Ansprüche 1 bis 11, bei dem die Mikrodosiervorrichtungen nebeneinander angeordnet und individuell adressierbar sind.

13. Mikrodosiervorrichtungsarray gemäß Anspruch 12, bei dem die Druckkammern (212), die Verdränger (206) und die Fluidleitungen (214) einer ersten Anzahl von Mikrodosiervorrichtungen durch eine erste Siliziumschicht (200), die an einer Hauptoberfläche derselben mit einer ersten Hauptoberfläche einer Glasplatte (202) verbunden ist, gebildet sind, während die Druckkammern (212), die Verdränger (206) und die Fluidleitungen (214) einer zweiten Anzahl von Mikrodosiervorrichtungen durch eine zweite Siliziumschicht (204), die an einer Hauptoberfläche derselben mit der zweiten Hauptoberfläche der Glasplatte (202) verbunden ist, gebildet sind.

14. Pipettiervorrichtung mit folgenden Merkmalen:

einer Druckkammer (24), die zumindest teilweise von einem Verdränger (10) begrenzt ist;

einer Betätigungseinrichtung (30) zum Betätigen des Verdrängers (10), wobei durch die Betätigung des Verdrängers (10) das Volumen (28) der Druckkammer (24) veränderbar ist;

einer Auslaßöffnung (26), die über eine Fluidleitung (22) fluidmäßig mit der Druckkammer (24) verbunden ist;

eine Einrichtung (12, 14) zum Erfassen der Stellung des Verdrängers (10); und

eine Steuereinrichtung, die mit der Betätigungseinrichtung (30) und der Einrichtung (12, 14) zum Erfassen des Stellung des Verdrängers (10) verbunden ist und die Betätigungseinrichtung (30) auf der Grundlage der erfaßten Stellung des Verdrängers (10) oder auf der Grundlage während zumindest eines vorherigen Pipettierzyklusses erfaßter Stellungen des Verdrängers (10) steuert, um das Ansaugen und/oder den Ausstoß eines definierten Fluidvolumens durch die Auslaßöffnung (26) zu bewirken,

dadurch gekennzeichnet,

daß die Steuereinrichtung Mittel zum Ansteuern der Betätigungseinrichtung (30) mit einem Signal geringer Flankensteilheit aufweist, um eine Bewegung des Verdrängers (10) aus einer ersten Stellung in eine vorbestimmte zweite Stellung zu bewirken, wobei die zweite Stellung des Verdrängers (10) ein größeres Volumen der Druckkammer (24) definiert als die erste Stellung; und

daß die Steuereinrichutung Mittel zum Ansteuern der Betätigungseinrichtung (30) mit einem Signal großer Flankensteilheit aufweist, um eine Bewegung des Verdrängers (10) aus der zweiten Stellung in die erste Stellung zu bewirken, um dadurch ein definiertes Fluidvolumen aus der Auslaßöffnung (26) auszustoßen.

15. Pipettiervorrichtung gemäß Anspruch 14, die ferner ein Medienreservoir aufweist, das über eine weitere Fluidleitung (20) fluidmäßig mit der Druckkammer (24) verbunden ist.

16. Pipettiervorrichtungsarray aus einer Mehrzahl von Pipettiervorrichtungen nach Anspruch 14 oder 15, bei dem die Pipettiervorrichtungen nebeneinander angeordnet und individuell adressierbar sind.

17. Verfahren zum Betreiben der Mikrodosiervorrichtung nach einem der Ansprüche 1 bis 10 mit folgenden Schritten:

   a) Ansteuern der Betätigungsvorrichtung (30) mit einem Signal geringer Flankensteilheit, um eine Bewegung des Verdrängers (10) aus einer ersten Stellung in eine vorbestimmte zweite Stellung zu bewirken, wobei die zweite Stellung des Verdrängers (10) ein größeres Volumen der Druckkammer (24) definiert als die erste Stellung; und

   b) Ansteuern der Betätigungsvorrichtung (30) mit einem Signal großer Flankensteilheit, um eine Bewegung des Verdrängers (10) aus der zweiten Stellung in die erste Stellung zu bewirken, um dadurch ein definiertes Fluidvolumen aus der Auslaßöffnung (26) auszustoßen.

18. Verfahren gemäß Anspruch 17, bei dem vor dem Schritt a) ein Schritt des Befüllens der Fluidleitungen (20, 22) und der Druckkammer (24) mit einem Fluid aus dem Medienreservoir durchgeführt wird.

19. Verfahren gemäß Anspruch 17 oder 18, bei dem das Ansteuersignal für die Betätigungseinrichtung (30) nach dem Schritt a) für eine vorbestimmte Zeitdauer auf einem Pegel gehalten wird, durch den bewirkt wird, daß der Verdränger (10) in der zweiten Stellung verbleibt.

20. Verfahren gemäß einem der Ansprüche 17 bis 19, bei dem im Schritt b) die Betätigungseinrichtung (30) derart angesteuert wird, daß der Verdränger (10) bei der Bewegung in die erste Position vor dem endgültigen Erreichen derselben durch die Betätigungseinrichtung (30) zunächst über die erste Position hinausbewegt wird.

21. Verfahren gemäß einem der Ansprüche 17 bis 20 in Rückbezug auf Anspruch 1, bei dem durch die Steuereinrichtung eine Rückströmung durch die erste Fluidleitung (20) während des Schritts b) bei der Ansteuerung der Betätigungseinrichtung im Schritt a) kompensiert wird, um im Schritt b) ein definiertes Fluidvolumen auszustoßen.

22. Verfahren gemäß einem der Ansprüche 17 bis 21, bei dem der Verdränger (10) in der ersten Stellung in einer vorgespannten Stellung ist, derart, daß durch die Ansteuerung der Betätigungsvorrichtung (30) im Schritt a) der Verdränger (10) durch eine Rückstellkraft in die zweite Stellung bewegt wird.

23. Verfahren zum Betreiben einer Mikrodosiervorrichtung gemäß Anspruch 11 definiert ist, mit folgenden Schritten:

   Eintauchen der Auslaßöffnung in ein zu dosierendes Fluid;

   Ansaugen des zu dosierenden Fluids durch Betätigen der Unterdruckerzeugungseinrichtung in das Medienreservoir; und

   Durchführen des Verfahrens gemäß Anspruch 17.

**Claims**

1. A microdosing device comprising:

   a pressure chamber (24) which is at least partly delimited by a displacer (10);

   an actuating device (30) for actuating the displacer (10), the volume (28) of the pressure chamber (24) being adapted to be changed by actuating the displacer (10),

   a media reservoir which is in fluid comunication with the pressure chamber (24) via a first fluid line (20);

an outlet opening (26) which is in fluid communication with the pressure chamber (24) via a second fluid line (22);

a means (12, 14) for detecting the position of the displacer (10); and

a control means which is connected to the actuating device (30) and to the means (12, 14) for detecting the position of the displacer (10) and which controls the actuating device (30) on the basis of the detected position of the displacer (10) or on the basis of displacer positions detected during at least one preceding dosing cycle so as to cause the discharge of a defined volume of fluid from the outlet opening (26),

characterized in that

the control means comprises means for controlling the actuating device (30) with a signal of low edge steepness so as to cause the displacer (10) to move from a first position to a predetermined second position, said second position of the displacer (10) defining a larger volume of the pressure chamber (24) than said first position; and

that the control means comprises means for controlling the actuating device (30) with a signal of high edge steepness so as to cause the displacer (10) to move from the second position to the first position for discharging in this way a defined volume of fluid from the outlet opening (26).

2. A microdosing device according to claim 1, wherein an active or a passive valve (42) is arranged in the fluid line (20) between the media reservoir and the pressure chamber (24), said valve being used for preventing a return flow of fluid from the pressure chamber (24) to the media reservoir.

3. A microdosing device according to claim 1 or 2, wherein the pressure chamber (24), the displacer (10) and the means (12, 14) for detecting the position of the displacer (10) are implemented as micromechanically produced structures.

4. A microdosing device according to claim 3, wherein the displacer (10) is realized as a stiffened membrane etched in a silicon wafer, and wherein the means for detecting the position of the displacer (10) is realized by piezoresistive elements (12, 14) provided in or on the membrane.

5. A microdosing device according to claim 4, wherein at least parts of the first and second fluid lines (20, 22), the outlet opening (26) and the pressure chamber (24) are defined by structures in the silicon wafer and/or a Pyrex glass plate (18) connected to said silicon wafer.

6. A microdosing device according to one of the claims 1 to 5, wherein the pressure chamber (24) has additionally arranged therein means for detecting the pressure in said pressure chamber (24).

7. A microdosing device according to claim 3, wherein the actuating device (30) is a piezo-stack actuator, said means for detecting the position of the displacer (10) being realized by a strain gauge provided on the piezo-stack actuator (30).

8. A microdosing device according to one of the claims 1 to 7, wherein the outer surround of the outlet opening (26) is coated with a hydrophobic material.

9. A microdosing device according to one of the claims 3 to 8, wherein the actuating device (60) and the control means are fixedly installed in a housing (62), whereas the pressure chamber (24), the displacer (10) and the means for detecting the position of the displacer are adapted to be replaceably installed in the housing.

10. A microdosing device according to one of the claims 1 to 9, wherein the outlet opening (26) is formed by an array comprising a plurality of openings.

11. A microdosing device according to one of the claims 1 to 10, which comprises in addition a means for generating a partial vacuum in the media reservoir.

12. A microdosing device array consisting of a plurality od microdosing devices according to one of the claims 1 to 11, wherein the microdosing devices are arranged side by side and adapted to be addressed individually.

**13.** A microdosing device array according to claim 12, wherein the pressure chambers (212), the displacers (206) and the fluid lines (214) of a first number of microdosing devices are formed by a first silicon layer (200) having a main surface thereof connected to a first main surface of a glass plate (202), whereas the pressure chambers (212) the displacers (206) and the fluid lines (214) of a second number of microdosing devices are formed by a second silicon layer (204) having a main surface thereof connected to the second main surface of the glass plate (202).

**14.** A pipetting device comprising:

a pressure chamber (24) which is at least partly delimited by a displacer (10);

an actuating device (30) for actuating the displacer (10), the volume (28) of the pressure chamber (24) being adapted to be changed by actuating the displacer (10),

an outlet opening (26) which is in fluid communication with the pressure chamber (24) via a fluid line (22);

a means (12, 14) for detecting the position of the displacer (10); and

a control means which is connected to the actuating device (30) and to the means (12, 14) for detecting the position of the displacer (10) and which controls the actuating device (30) on the basis of the detected position of the displacer (10) or on the basis of displacer positions detected during at least one preceding pipetting cycle so as to cause a defined volume of fluid to be sucked in through and/or discharged from the outlet opening (26),

characterized in that

the control means comprises means for controlling the actuating device (30) with a signal of low edge steepness so as to cause the displacer (10) to move from a first position to a predetermined second position, said second position of the displacer (10) defining a larger volume of the pressure chamber (24) than said first position; and

that the control means comprises means for controlling the actuating device (30) with a signal of high edge steepness so as to cause the displacer (10) to move from the second position to the first position for discharging in this way a defined volume of fluid from the outlet opening (26).

**15.** A pipetting device according to claim 14, comprising in addition a media reservoir which is in fluid communication with the pressure chamber (24) via a further fluid line (20).

**16.** A pipetting device array consisting of a plurality of pipetting devices according to claim 14 or 15, wherein the pipetting devices are arranged side by side and adapted to be addressed individually.

**17.** A method of operating the microdosing device according to one of the claims 1 to 10, comprising the following steps:

a) controlling the actuating device (30) with a signal of low edge steepness so as to cause the displacer (10) to move from a first position to a predetermined second position, said second position of the displacer (10) defining a larger volume of the pressure chamber (24) than said first position;

b) controlling the actuating device (30) with a signal of high edge steepness so as to cause the displacer (10) to move from the second position to the first position for discharging in this way a defined volume of fluid from the outlet opening (26).

**18.** A method according to claim 17, wherein, prior to step a), a step is carried out in which the fluid lines (20, 22) and the pressure chamber (24) are filled with a fluid from the media reservoir.

**19.** A method according to claim 17 or 18, wherein, after step a), the control signal for the actuating device (30) is held on a level for a predetermined period of time, said signal level causing the displacer (10) to remain at the second position.

**20.** A method according to one of the claims 17 to 19, wherein, in step b), the actuating device (30) is controlled in such a way that the displacer (10), when moving to the first position, is initially moved beyond said first position by means of said actuating device (30) before it finally reaches said first position.

**21.** A method according to one of the claims 17 to 20 referring back to claim 1, wherein, during control of the actuating device in step a), a return flow through the first fluid line (20) during step b) is compensated for with the aid of the control means so that a defined volume of fluid will be discharged in step b).

**22.** A method according to one of the claims 17 to 21, wherein the displacer (10), when at its first position, occupies a pretensioned position in such a way that, due to the control of the actuating device (30) in step a), the displacer (10) will be moved to the second position by a restoring force.

**23.** A method of operating a microdosing device as defined in claim 11, said method comprising the following steps:

immersing the outlet opening in a fluid to be dosed;

sucking the fluid to be dosed into the media reservoir by actuating the vacuum generation means; and

carrying out the method according to claim 17.

**Revendications**

**1.** Dispositif de microdosage aux caractéristiques suivantes :

une chambre de refoulement (24) délimitée au moins partiellement par un refouleur (10) ;
un dispositif d'actionnement (30) destiné à actionner le refouleur (10), le volume (28) de la chambre de refoulement (24) pouvant être modifié par l'actionnement du refouleur (10) ;
un réservoir à fluide relié en fluide à la chambre de refoulement (24) par un premier conduit de fluide (20) ;
une ouverture de sortie (26) reliée en fluide à la chambre de refoulement (24) par un second conduit de fluide (22) ;
un dispositif (12, 14) destiné à capter la position du refouleur (10) ; et
un dispositif de commande relié au dispositif d'actionnement (30) et au dispositif (12, 14) destiné à capter la position du refouleur (10) et commandant le dispositif d'actionnement (30) sur base de la position captée du refouleur (10) ou sur base de positions du refouleur (10) captées pendant au moins un cycle de dosage précédent, pour provoquer l'éjection de l'ouverture de sortie (26) d'un volume de fluide défini,

caractérisé par le fait

que le dispositif de commande présente des moyens d'activation du dispositif d'actionnement (30) par un signal à faible pente, afin de provoquer un déplacement du refouleur (10) d'une première position vers une seconde position prédéterminée, la seconde position du refouleur (10) définissant un volume de la chambre de refoulement (24) plus grand que la première position ; et
que le dispositif de commande présente des moyens d'activation du dispositif d'actionnement (30) par un signal à forte pente, afin de provoquer un déplacement du refouleur (10) de la seconde position vers la première position, afin d'éjecter de ce fait de l'ouverture de sortie (26) un volume de fluide défini.

**2.** Dispositif de microdosage suivant la revendication 1, dans lequel est disposée, dans le conduit de fluide (20), entre le réservoir à fluide et la chambre de refoulement (24), une soupape (42) active ou passive destinée à empêcher un écoulement de fluide de la chambre de refoulement (24) vers le réservoir à fluide.

**3.** Dispositif de microdosage suivant la revendication 1 ou 2, dans lequel la chambre de refoulement (24), le refouleur (10) et le dispositif (12, 14) destiné à capter la position du refouleur (10) sont réalisés sous forme de structures produites par un procédé micromécanique.

**4.** Dispositif de microdosage suivant la revendication 3, dans lequel le refouleur (10) est réalisé sous forme de membrane rigidifiée gravée dans une plaquette en silicium et dans lequel le dispositif destiné à capter la position du refouleur (10) est réalisé par des éléments piézorésistants (12, 14) situés dans ou sur la membrane.

5. Dispositif de microdosage suivant la revendication 4, dans lequel au moins des parties des premier et second conduits de fluide (20, 22), l'ouverture de sortie (26) et la chambre de refoulement (24) sont définies par des structures dans la plaquette en silicium et/ou dans un disque en verre Pyrex (18) assemblé avec la plaquette en silicium.

6. Dispositif de microdosage suivant l'une des revendications 1 à 5, dans lequel sont disposés, par ailleurs, dans la chambre de refoulement (24), des dispositifs destinés à capter la pression dans la chambre de refoulement (24).

7. Dispositif de microdosage suivant la revendication 3, dans lequel le dispositif d'actionnement (30) est un actuateur piézo-empilé, le dispositif destiné à capter la position du refouleur (10) étant réalisé par une bande de mesure de dilatation placée sur l'actuateur piézo-empilé (30).

8. Dispositif de microdosage suivant l'une des revendications 1 à 7, dans lequel le bord périphérique extérieur de l'ouverture de sortie (26) est revêtu d'un matériau hydrophobe.

9. Dispositif de microdosage suivant l'une des revendications 3 à 8, dans lequel le dispositif d'actionnement (60) et le dispositif de commande sont montés fixes dans un boîtier (62), tandis que la chambre de refoulement (24), le refouleur (10) et le dispositif destiné à capter la position du refouleur peuvent être installés de manière échangeable dans le boîtier.

10. Dispositif de microdosage suivant l'une des revendications 1 à 9, dans lequel l'ouverture de sortie (26) est formée par une rangée d'une pluralité d'ouvertures.

11. Dispositif de microdosage suivant l'une des revendications 1 à 10, présentant, par ailleurs, un dispositif destiné à générer une dépression dans le réservoir à fluide.

12. Rangée de dispositifs de microdosage composée d'une pluralité de dispositifs de microdosage suivant l'une des revendications 1 à 11, dans laquelle les dispositifs de microdosage sont disposés juxtaposés et sont adressables individuellement.

13. Rangée de dispositifs de microdosage suivant la revendication 11, dans laquelle les chambres de refoulement (212), les refouleurs (206) et les conduits de fluide (214) d'un premier nombre de dispositifs de microdosage sont formés par une première couche de silicium (200) assemblée, sur une surface principale de celle-ci, avec une première surface principale d'une plaque de verre (202), tandis que les chambres de refoulement (212), les refouleurs (206) et les conduits de fluide (214) d'un second nombre de dispositifs de microdosage sont formés par une seconde couche de silicium (204) assemblée, sur une surface principale de celle-ci, avec la seconde surface principale de la plaque de verre (202).

14. Dispositif de mise en pipette, aux caractéristiques suivantes :

   une chambre de refoulement (24) délimitée au moins partiellement par un refouleur (10) ;
   un dispositif d'actionnement (30) destiné à actionner le refouleur (10), le volume (28) de la chambre de refoulement (24) pouvant être modifié par l'actionnement du refouleur (10) ;
   une ouverture de sortie (26) reliée en fluide à la chambre de refoulement (24) par un conduit de fluide (22) ;
   un dispositif (12, 14) destiné à capter la position du refouleur (10) ; et
   un dispositif de commande relié au dispositif d'actionnement (30) et au dispositif (12, 14) destiné à capter la position du refouleur (10) et commandant le dispositif d'actionnement (30) sur base de la position captée du refouleur (10) ou sur base de positions du refouleur (10) captées pendant au moins un cycle de mise en pipette précédent, pour provoquer l'aspiration et/ou l'éjection, par l'ouverture de sortie (26), d'un volume de fluide défini,

   caractérisé par le fait

   que le dispositif de commande présente des moyens d'activation du dispositif d'actionnement (30) par un signal à faible pente, afin de provoquer un déplacement du refouleur (10) d'une première position vers une seconde position prédéterminée, la seconde position du refouleur (10) définissant un volume de la chambre de refoulement (24) plus grand que la première position ; et
   que le dispositif de commande présente des moyens d'activation du dispositif d'actionnement (30) par un signal à forte pente, afin de provoquer un déplacement du refouleur (10) de la seconde position vers la première position, afin d'éjecter de ce fait de l'ouverture de sortie (26) un volume de fluide défini.

15. Dispositif de mise en pipette suivant la revendication 14, présentant, par ailleurs, un réservoir à fluide relié en fluide à la chambre de refoulement (24) par un autre conduit de fluide (20).

16. Rangée de dispositifs de mise en pipette composée d'une pluralité de dispositifs de mise en pipette suivant la revendication 14 ou 15, dans laquelle les dispositifs de mise en pipette sont disposés juxtaposés et sont adressables individuellement.

17. Procédé pour faire fonctionner le dispositif de microdosage suivant l'une des revendications 1 à 10, aux étapes suivantes consistant à :

   a) activer le dispositif d'actionnement (30) par un signal à faible pente, afin de provoquer un déplacement du refouleur (10) d'une première position vers une seconde position prédéterminée, la seconde position du refouleur (10) définissant un volume de la chambre de refoulement (24) plus grand que la première position ; et
   b) activer le dispositif d'actionnement (30) par un signal à forte pente, afin de provoquer un déplacement du refouleur (10) de la seconde position vers la première position, afin d'éjecter de ce fait de l'ouverture de sortie (26) un volume de fluide défini.

18. Procédé suivant la revendication 17, dans lequel est réalisée, avant l'étape a), une étape consistant à remplir les conduits de fluide (20, 22) et la chambre de refoulement (24) d'un fluide venant du réservoir à fluide.

19. Procédé suivant la revendication 17 ou 18, dans lequel le signal d'activation du dispositif d'actionnement (30) est maintenu, après l'étape a), pendant un laps de temps prédéterminé à un niveau par lequel il est obtenu que le refouleur (10) reste dans la seconde position.

20. Procédé suivant l'une des revendications 17 à 19, dans lequel, à l'étape b), le dispositif d'actionnement (30) est activé de telle sorte que le refouleur (10) soit, lors du déplacement vers la première position, avant que celle-ci ne soit définitivement atteinte, déplacé par le dispositif d'actionnement (30) au-delà de la première position.

21. Procédé suivant l'une des revendications 17 à 20, avec renvoi à la revendication 1, dans lequel un retour d'écoulement dans le premier conduit de fluide (20) au cours de l'étape b) est, lors de l'activation du dispositif de commande à l'étape a), compensé par le dispositif de commande, afin d'éjecter à l'étape b) un volume de fluide défini.

22. Procédé suivant l'une des revendications 17 à 21, dans lequel le refouleur (10) se trouve, dans la première position, en une position prétendue, de sorte que, par l'activation du dispositif d'actionnement (30) à l'étape a), le refouleur (10) est déplacé vers la seconde position par une force de rappel.

23. Procédé pour faire fonctionner un dispositif de microdosage suivant la revendication 11, aux étapes suivantes consistant à :

   submerger l'ouverture de sortie dans un fluide à doser ;
   aspirer le fluide à doser, en actionnant le dispositif de génération de dépression dans la réservoir à fluide ; et
   mettre en oeuvre le procédé suivant la revendication 17.

Fig. 1

Fig. 2

U(t)

Einregeln
des Fluidlevel

Ansaugphase →

t

Dosierphase

Fig. 3

Fig. 4

Fig. 5A

Fig. 5B

$V_o < 0$    $V_m > 0$

$\Phi_R > 0$        $\Phi_D > 0$

$P_K$

Fig. 7

Fig. 6A

Fig. 6B

Fig. 8

Fig. 9